# FASCICULE DE BREVET EUROPEEN

(11) **EP 2 366 898 B1**
(45) Date de publication et mention de la délivrance du brevet: **27.12.2017**
(21) Numéro de dépôt: 11154096.9
(22) Date de dépôt: 11.02.2011
(51) Int. Cl.: F03G 7/06, H01H 9/04, H01H 13/06

(54) **Actionneur thermique**
Thermoschalter
Thermal actuator

(30) Priorité: 12.02.2010 FR 1050992
(43) Date de publication de la demande: 21.09.2011
(73) Titulaire: AIRBUS OPERATIONS (S.A.S), 31060 Toulouse (FR)
(72) Inventeur: Frustie, Valérie, 31200 Toulouse (FR); Lefort, Marc, 31450 Pompertuzat (FR)
(74) Mandataire: Gicquel, Olivier Yves Gérard

(56) Documents cités:
- WO-A1-98/32141
- WO-A1-2008/028629
- WO-A2-2008/009822
- US-A1- 2007 243 073

## Description

La présente invention appartient au domaine des actionneurs. Plus précisément, l'invention concerne un actionneur thermique sensible à une variation de température. Une application privilégiée de l'actionneur selon l'invention concerne le formage à chaud de pièces métalliques ou composites de grandes dimensions.

Certains actionneurs classiques, qu'ils soient hydrauliques, thermiques (par exemple US 2007/243073A1) ou autres, sont destinés à fonctionner à température ambiante et à basse température. D'autres sont destinés à fonctionner à température ambiante et à haute température, généralement inférieure à 200°C. Il n'existe actuellement pas d'actionneurs qui fonctionnent à des températures très élevées, supérieures à 200 °C. Les actionneurs utilisés à de telles températures sont généralement équipés de systèmes de refroidissement complexes. De tels ensembles actionneur/systèmes de refroidissement s'avèrent compliqués à mettre en place et à utiliser.

En plus des contraintes liées aux variations de température, les actionneurs doivent exercer une force de poussée importante.

La présente invention vise donc à proposer un actionneur permettant son utilisation pour des températures élevées, capable de transmettre des efforts compris entre 600 et 1000 kilonewtons, et qui soit simple de mise en oeuvre.

Pour cela, elle propose un actionneur thermique comportant au moins deux éléments extensibles, aptes à subir une augmentation de longueur dans une direction d'application d'efforts XX', sous l'effet d'une élévation de température, et inversement, et au moins un élément invariant, apte à subir 25 une augmentation de longueur très inférieure à l'augmentation de longueur de l'élément extensible voire nulle, sous l'effet de ladite élévation de température, chaque élément invariant étant accolé à et intercalé entre deux éléments extensibles.

Dans une forme de réalisation préférentielle de l'invention, les éléments extensibles et invariants sont des éléments tubulaires de diamètres différents disposés coaxialement selon la direction d'application d'efforts XX'.

Avantageusement, l'élément invariant comporte, à une première extrémité longitudinale, une collerette, dite collerette interne, s'étendant radialement vers un intérieur de l'actionneur thermique, et à une extrémité longitudinale opposée, une collerette, dite collerette externe, s'étendant radialement vers un extérieur de l'actionneur thermique.

Les éléments extensibles sont de préférence des éléments à coefficient de dilatation thermique positif.

L'élément invariant est de préférence un élément à coefficient de dilatation thermique au plus égal à zéro.

La description détaillée de l'invention est faite en référence aux figures qui représentent :
**Figure 1****,** une coupe transversale de l'actionneur selon l'invention dans sa position au repos,
**Figure 2****,** une vue en perspective du demi-actionneur selon l'invention dans sa position déployée,
**Figure 3****,** un exemple d'application de l'actionneur thermique selon l'invention dans une presse chauffante.

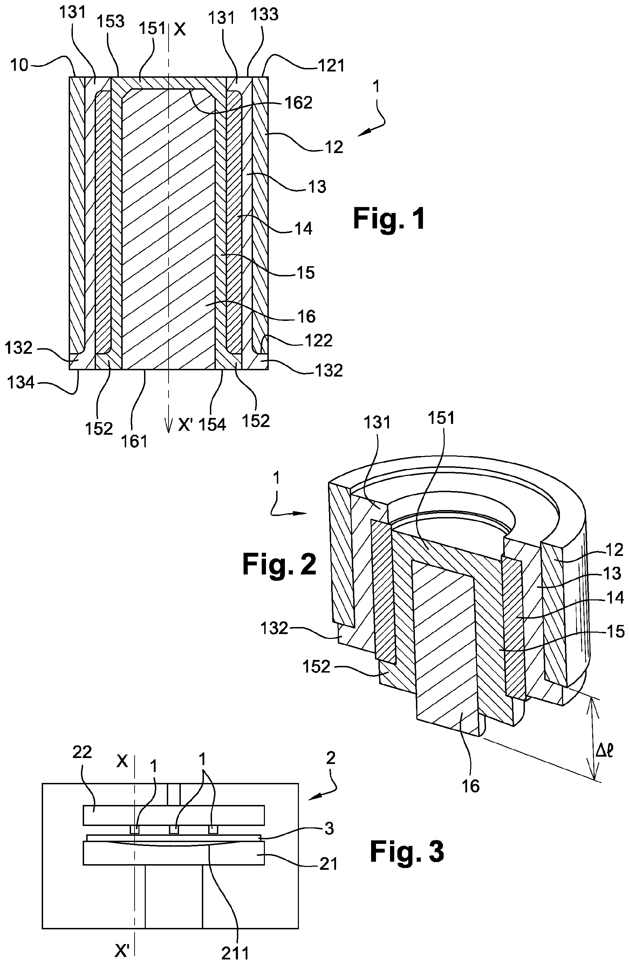

Dans la forme de réalisation représentée sur la figure 1, un actionneur thermique 1 selon l'invention présente un axe de symétrie longitudinal XX'. Cet axe de symétrie XX' correspond à l'axe d'application des efforts selon lequel on désire commander un déplacement.

On utilise les termes bas et haut, inférieur et supérieur par référence à cet axe, comme représenté sur les figures 1 et 2.

L'actionneur thermique comporte une alternance d'éléments extensibles et d'éléments invariants.

Dans l'exemple des figures 1 et 2, l'actionneur thermique 1 comporte :
- trois éléments extensibles : un élément extensible externe 12, un élément extensible intermédiaire 14 et un élément extensible central 16,
- deux éléments invariants : un premier élément invariant intermédiaire 13, compris entre l'élément extensible externe 12 et l'élément extensible intermédiaire 14 et un deuxième élément invariant intermédiaire 15, compris entre l'élément extensible intermédiaire 14 et l'élément extensible central 16.

Par « élément extensible », on désigne un élément apte à subir principalement une forte augmentation de longueur dans une direction de l'axe XX', sous l'effet d'une élévation de température.

De préférence, l'élément extensible est réalisé dans un matériau à fort coefficient de dilatation thermique positif, tel que les aciers inoxydables austénitique réfractaire, par exemple l'inox réfractaire, ou le tungstène.

Dans un exemple préféré de réalisation mais non limitatif de l'invention, les éléments extensibles sont réalisés dans le même matériau.

Par « élément invariant », on entend un élément apte à subir, lors d'une élévation de température, une augmentation de la longueur dans la direction de l'axe XX' très inférieure à l'augmentation de longueur de chacun des éléments extensibles, voire nulle.

Ladite augmentation de longueur de l'élément invariant peut être obtenue par exemple en réalisant l'élément invariant dans un matériau présentant un faible coefficient de dilatation voir nul.

Par exemple, l'élément invariant est réalisé dans un matériau tel que le molybdène (coefficient de dilatation faible) ou l'INVAR®.

Dans un exemple préféré de réalisation mais non limitatif de l'invention, les éléments invariants sont réalisés dans le même matériau.

Bien que l'exemple de réalisation de l'actionneur thermique soit décrit et illustré sur les figures dans le cas de trois éléments extensibles et deux éléments invariants intercalés, le nombre de ces éléments extensibles et invariants n'est pas limité à celui décrit et illustré. Ainsi, il est possible, sans se départir du cadre de l'invention, de réaliser un actionneur thermique comportant deux, quatre éléments extensibles ou plus, avec la condition d'intercaler un élément invariant entre deux éléments extensibles.

Dans la forme de réalisation préférée illustrée sur la figure 2, mais non limitative de l'invention, les éléments extensibles et invariants présentent une forme tubulaire et sont disposés coaxialement les uns contre les autres selon l'axe XX'.

De façon plus précise, les éléments extensibles externe 12 et intermédiaire 14 sont des éléments tubulaires creux et l'élément extensible central 16 est préférentiellement un élément tubulaire plein.

Les premier et deuxième éléments invariants intermédiaires 13, 15 sont des éléments tubulaires comportant chacun, au niveau de leurs extrémités longitudinales 133, 134, 153, 154, une collerette radiale 131, 132, 151, 152.

A une première extrémité longitudinale 133, 153, au niveau d'une extrémité 10 de l'actionneur, l'élément invariant 13, 15 comporte une collerette, dite collerette interne 131, 151, faisant saillie radialement vers l'intérieur de l'actionneur, sensiblement de dimension une épaisseur de l'élément extensible voisin 14, 16.

A une extrémité longitudinale opposée 134, 154, l'élément invariant 13, 15 comporte une collerette, dite collerette externe 132, 152, faisant saillie radialement vers l'extérieur de l'actionneur, sensiblement de dimension une épaisseur de l'élément extensible voisin 12, 14.

Ainsi, l'élément extensible intermédiaire 14 est bloqué axialement et radialement par les éléments invariants 13 et 15.

De même, l'élément extensible externe 12 prend appui, par une extrémité longitudinale inférieure 122 sur la collerette externe 132 du premier élément invariant intermédiaire 13. Et l'élément extensible central 16 prend appui par une extrémité longitudinale supérieure 162 sur la collerette interne 151 du deuxième élément invariant intermédiaire 15.

Le chauffage des éléments extensibles et invariants, assurant le fonctionnement de l'actionneur dans un premier sens, dit « d'extension », selon la direction XX', est réalisé par exemple soit par un échange de chaleur avec l'environnement, soit par des moyens de chauffage (non représentés) associés à chaque élément. Ces moyens de chauffage sont par exemple constitués par des résistances électriques ou par tout système analogue susceptible d'élever la température des éléments de manière contrôlée.

L'augmentation de longueur des différents éléments, invariants et extensible, est fonction de la température.

Le refroidissement des éléments extensibles, assurant le fonctionnement de l'actionneur dans le sens inverse, dit « de rétractation », selon la direction X'X, est assuré soit par un échange de chaleur avec l'environnement, soit par liaison avec une source froide ou soit par tout système analogue susceptible de diminuer la température des éléments extensibles.

Les différents éléments, invariants et extensibles, sont dimensionnés de sorte à permettre la dilatation radiale entre chaque élément, selon des méthodes connues de l'homme du métier.

L'actionneur thermique présente une hauteur variant sensiblement entre 150 et 300mm et un diamètre externe de sensiblement 150mm.

La hauteur de l'actionneur thermique et le nombre d'étage sont les deux paramètres dimensionnant pour chaque application de l'actionneur thermique.

Par étage, on entend un ensemble élément extensible-élément invariant.

Lorsque l'actionneur thermique 1 selon l'invention est au repos, les différents éléments qui le constituent occupent la position illustrée sur la figure 1. L'actionneur thermique présente ainsi un encombrement réduit.

Lorsque l'actionneur thermique 1 est chauffé à une température déterminée, les éléments extensibles, qui présentent tous un coefficient de dilatation thermique élevée, s'allongent simultanément tandis que la longueur des éléments invariants reste pratiquement inchangée, du fait de son coefficient de dilatation thermique faible ou nul.

L'élément extensible externe 12 appuie sur la collerette externe 132 du premier élément invariant intermédiaire 13, provoquant un déplacement dudit élément invariant selon la direction XX'. Ce déplacement provoque simultanément un déplacement de l'élément extensible intermédiaire 14 attenant par l'intermédiaire de la collerette interne 131. Toujours simultanément, l'élément extensible intermédiaire 14 s'allonge et appuie sur la collerette externe 152 du deuxième élément invariant intermédiaire 15, provoquant un déplacement dudit élément invariant selon la direction XX', et par conséquent un déplacement de l'élément extensible central 16 attenant par l'intermédiaire de la collerette interne 151.

On obtient ainsi une longueur de course Δl importante pour l'actionneur thermique 1, une transmission d'efforts importante et une grande précision.

L'actionneur thermique 1 selon l'invention permet en utilisant autant d'éléments extensibles et invariants que nécessaire, d'accroître la longueur de la course de l'actionneur sans augmenter pour autant la longueur au repos de l'actionneur.

Bien entendu, l'invention n'est pas limitée à la forme de réalisation qui vient d'être décrit à titre d'exemple, mais en couvre toutes les variantes.

Ainsi, si l'actionneur thermique 1 selon l'invention présente avantageusement un axe de symétrie, cette disposition n'est pas essentielle.

### Exemple

Le tableau ci dessous illustre les longueurs de courses qui peuvent être obtenues avec l'actionneur thermique 1 selon l'invention, en fonction du nombre d'éléments extensibles et pour les paramètres fixés suivants :
- actionneur thermique de hauteur 250mm,
- température de chauffage de l'actionneur thermique comprise entre 20°C et 700°C,
- éléments extensibles réalisés en inox réfractaire,
- éléments invariants réalisés en molybdène.

| | | | | | |
|---|---|---|---|---|---|
| *Nombres d'éléments extensibles* | 2 | 3 | 4 | 5 | 6 |
| *Longueur de course* Δ*l (mm)* | 4 | 5,8 | 7,3 | 8,9 | 10,5 |

### Application

Un tel actionneur trouve particulièrement, mais non limitativement, application pour le formage à chaud de pièces composites ou métalliques, tels que le titane, de grandes dimensions dans des presses chauffantes.

Le formage à chaud consiste à déformer, à chaud, une pièce en matériau composite ou métallique, en utilisant une matrice de formage.

Effectuer une déformation de la pièce au cours de la montée en température permet ainsi de ne pas endommager la pièce.

La presse chauffante 2, comme illustrée figure 3, comporte une enceinte comportant :
- un plateau inférieur 21 portant une forme 211 correspondant au profil que l'on veut obtenir pour la pièce 3 à former, laquelle est placée sur cette forme,
- un plateau supérieur 22 comportant au moins un actionneur thermique 1.

Chaque actionneur thermique 1 est relié rigidement, à sa première extrémité 10, au niveau de l'élément extensible externe 12, au plateau supérieur et est en vis à vis, à une extrémité opposée 161, à la pièce que l'on souhaite déformer selon l'axe XX'.

Lorsque l'enceinte est mise sous pression et chauffée à très haute température, par exemple de l'ordre de 600-700°C, la montée en température fait chuter les caractéristiques mécaniques de la pièce à former. Les actionneurs se dilatent pendant la montée en température et viennent appliquer la pièce contre la forme.

L'actionneur selon l'invention présente ainsi l'avantage d'être utilisable dans des conditions de température élevée, d'être de constitution simple et d'un encombrement restreint.

## Revendications

1. Actionneur thermique (1) comportant au moins deux éléments extensibles (12, 14, 16), aptes à subir une augmentation de longueur dans une direction d'application d'efforts (XX'), sous l'effet d'une élévation de température, et inversement, et au moins un élément invariant (13, 15), apte à subir une augmentation de longueur très inférieure à l'augmentation de longueur de l'élément extensible voire nulle, sous l'effet de ladite élévation de température, chaque élément invariant (13, 15) étant accolé à et intercalé entre deux éléments extensibles (12, 14, 16), **caractérisé en ce que** l'élément invariant (13, 15) comporte, à une première extrémité longitudinale (133, 153), une collerette, dite collerette interne (131, 151), s'étendant radialement vers un intérieur de l'actionneur, et à une extrémité longitudinale opposée (134, 154), une collerette, dite collerette externe (132, 152), s'étendant radialement vers un extérieur de l'actionneur.

2. Actionneur thermique (1) selon la revendication 1 dans lequel les éléments extensibles (12, 14, 16) et invariants (13, 15) sont des éléments tubulaires de diamètres différents disposés coaxialement selon la direction d'application d'efforts (XX').

3. Actionneur thermique (1) selon l'une des revendications précédentes dans lequel les éléments extensibles (12, 14, 16) sont des éléments à coefficient de dilatation thermique positif.

4. Actionneur thermique (1) selon l'une des revendications précédentes dans lequel l'élément invariant (13, 15) est un élément à coefficient de dilatation thermique au plus égal à zéro.

## Patentansprüche

1. Thermisches Stellglied (1), das mindestens zwei dehnbare Elemente (12, 14, 16), die unter der Wirkung einer Temperaturerhöhung eine Vergrößerung der Länge in einer Kraftanwendungsrichtung (XX') und umgekehrt erfahren können, und mindestens ein unveränderliches Element (13, 15) aufweist, das unter der Wirkung der Temperaturerhöhung eine sehr viel geringere Längenvergrößerung als die Längenvergrößerung des dehnbaren Elements, sogar Null, erfahren kann, wobei jedes unveränderliche Element (13, 15) an zwei dehnbare Elemente (12, 14, 16) angefügt und zwischen sie eingefügt ist, **dadurch gekennzeichnet, dass** das unveränderliche Element (13, 15) an einem ersten Längsende (133, 153) einen Kragen, innerer Kragen (131, 151) genannt, der sich radial zu einer Innenseite des Stellglieds erstreckt, und an einem gegenüberliegenden Längsende (134, 154) einen Kragen, äußerer Kragen (132, 152) genannt, aufweist, der sich radial zu einer Außenseite des Stellglieds erstreckt.

2. Thermisches Stellglied (1) nach Anspruch 1, wobei die dehnbaren (12, 14, 16) und unveränderlichen Elemente (13, 15) rohrförmige Elemente mit unterschiedlichen Durchmessern sind, die gemäß der Kraftanwendungsachse (XX') koaxial angeordnet sind.

3. Thermisches Stellglied (1) nach einem der vorhergehenden Ansprüche, wobei die dehnbaren Elemente (12, 14, 16) Elemente mit positivem Wärmeausdehnungskoeffizient sind.

4. Thermisches Stellglied (1) nach einem der vorhergehenden Ansprüche, wobei das unveränderliche Element (13, 15) ein Element mit einem Wärmeausdehnungskoeffizienten höchstens gleich Null ist.

## Claims

1. Thermal actuator (1) including at least two extensible elements (12, 14, 16), which elements are capable of undergoing an increase in length in a direction of force application (XX'), under the effect of an increase in temperature, and vice versa, and at least one invariant element (13, 15), which element is capable of undergoing an increase in length that is much smaller than the increase in length of the extensible element, or even no increase in length, under the effect of said increase in temperature, each invariant element (13, 15) being bonded to and intercalated between two extensible elements (12, 14, 16), **characterized in that** the invariant element (13, 15) includes, at a first longitudinal end (133, 153), a collar, referred to as the inner collar (131, 151), extending radially inwards towards an interior of the actuator, and at an opposite longitudinal end (134, 154), a collar, referred to as the outer collar (132, 152), extending radially outwards towards an exterior of the actuator.

2. Thermal actuator (1) according to Claim 1, in which the extensible (12, 14, 16) and invariant (13, 15) elements are tubular elements having different diameters that are arranged coaxially in the direction of force application (XX').

3. Thermal actuator (1) according to one of the preceding claims, in which the extensible elements (12, 14, 16) are elements exhibiting a positive thermal expansion coefficient.

4. Thermal actuator (1) according to one of the preceding claims, in which the invariant element (13, 15) is an element exhibiting a thermal expansion coefficient that is at most equal to zero.
